# EUROPEAN PATENT SPECIFICATION

(11) **EP 2 753 669 B1**
(45) Date of publication and mention of the grant of the patent: **29.08.2018**
(21) Application number: 12707011.8
(22) Date of filing: 22.02.2012
(51) Int. Cl.: C09D 127/12, C09D 11/12

(54) **AN INK COMPOSITION FOR A NON-STICK COATING AND A COATED SUBSTRATE COMPRISING THE PATTERN THEREFROM**
TINTENZUSAMMENSETZUNG FÜR ANTIHAFT-BESCHICHTUNGEN UND BESCHICHTETES SUBSTRAT UMFASSEND DRUCKMUSTER DAVON
COMPOSITION D'ENCRE POUR UN REVETEMENT ANTI-ADHESIF UN SUBSTRAT REVÊTU COMPRENENT DE MOTIFS A PARTIR DE CELLE-CI

(30) Priority: 09.09.2011 CN 201110280636
(43) Date of publication of application: 16.07.2014
(60) Divisional application: 18171352.0
(73) Proprietor: The Chemours Company FC, LLC, Wilmington DE 19801 (US)
(72) Inventor: MAO, Xuepu, Shenzhen 518040 (CN); THOMAS, Philippe, Andre, Fernand, B-1357 Helecine (BE); DONG, Feng, Shenzhen 518040 (CN)
(74) Representative: Dehns
(86) International application number: PCT/US2012/026094
(87) International publication number: WO 2013/036283

(56) References cited:
- EP-A1- 0 217 512
- GB-A- 1 495 687
- US-A- 4 806 391
- US-A- 5 079 073
- US-A1- 2005 070 659
- US-A1- 2009 202 782

## Description

### FIELD OF THE INVENTION

The invention relates to ink compositions suitable for providing patterns such as labels, markings, or decorative patterns on nonstick surfaces of fluoropolymer coatings. The invention also relates to methods for manufacturing coated articles having at least two layers of fluoropolymer coatings and a print layer below the top layer, where the print layer comprises the inventive ink compositions to exhibit patterns of high definition and uniform appearance.

### BACKGROUND OF THE INVENTION

Non-stick culinary utensils (or cookware) have been widely introduced in the market for many years. The non-stick surface typically is formed by application of one, two, three or even four coatings on a metal substrate such as aluminum, including an undercoat (or a primer) that adheres to the substrate, and an overcoat providing the non-stick finish. These non-stick surfaces generally have a dark gray to black color.

In some cases, it is desirable to have label or marking shown on the PTFE coating for functional purpose, e.g., markings of water level inside a non-stick rice cooker. In other cases, having decorative patterns on the PTFE coating can simply improve the appearance of these culinary utensils. However, due to the non-stick nature of the fluoropolymer surface, and typical applications & working temperature of these utensils such as frying pan, saucepan, or rice cooker, a suitable ink composition must adhere strongly to the non-stick surface, can withstand to temperature up to at least 200°C as well as afford high resistance to wear.

In addition to the properties of good adhesion, heat stability and wear resistance, the ink composition is also required to have a suitable viscosity (rheology property) for a specific application method (e.g., screen printing, pad printing, roller coating or coil coating) to provide a clear and sharp image of a marking or decorative pattern. In order to attain the suitable viscosity, a thickening agent can be used in the ink composition. When the thickening agent is a polymer such as polyacrylate, polyurethane or polyester, it can be referred to as a binder. Preferably, the thickening agent or binder is a safe material recognized by the global regulatory agencies for culinary utensils, for example, the Food and Drug Administration (FDA) of the United States, the European Food Safety Authority (EFSA) of European Union, and the General Administration for Quality Supervision, Inspection and Quarantine of the People's Republic of China.

US Patent 4,677,000 disclosed a colored composition containing an aqueous dispersion or a powder of fluorocarbon resin, colored pigment, a water miscible solvent, and acrylic copolymer (at pH >9) as a thickening agent. The colored composition is applied to the dried primer through a serigraphic screen (viscosity of 10,000-120,000 mPa.s at 20°C), then baked at 400°C to obtain a decorative layer of 2-25 microns in thickness. JP Patent 2605964 also discloses a tampo printing ink comprising fluororesin, carbon black or titanium oxide, and an acrylic resin as a binder.

One concern of using acrylic copolymer or acrylic resin as a thickening agent in an ink composition is that these materials are not on the approval list of the FDA or EFSA.

Interestingly, JP Patent 2791517 discloses a method of providing a fluororesin multi-layered material, where the multi-layered material includes a print indication layer comprising acrylonitrile resin as the binder. To reduce the surface unevenness that results from the stamped ink, the binder resin is thermally decomposed and dissipated as gas through the uncalcined fluororesin layer at the decomposition temperature of the binder resin. However, the decomposition of binder resin is typically incomplete and tends to cause yellowness of the printed markings.

GB Patent 1495687 discloses a decorative coating for a heat-stable polymer coating comprising *inter alia* PTFE and colloidal silica sol. However, the resulting decorative pattern is not sufficiently clear and sharp, so improvements are still sought.

Therefore, there remains a need for an ink composition which comprises a thickening agent or binder that meets the requirements of the above referenced regulatory agencies and still has other desirable properties including good adhesion, heat stability and wear resistance for providing labels, markings or decorative patterns for fluoropolymer coatings.

### SUMMARY OF THE INVENTION

This invention is directed to an ink composition for forming a pattern on a non-stick coating comprising:
(a) 25-65 weight % of a fluoropolymer selected from PTFE, PFA, FEP, and mixtures thereof;
(b) 0-25 weight % of a colorant selected from organic pigments, inorganic pigments, and mixtures thereof;
(c) 1-15 weight % of amorphous (fumed) silica particles;
(d) 1-15 weight % of a nonionic surfactant, wherein the nonionic surfactant comprises at least one aliphatic alcohol ethoxylate, or a mixture thereof; and
(e) 10-50 weight % of a liquid carrier selected from water, water-miscible solvents and mixtures thereof;
wherein the weight % is based on the total weight of the ink composition;
the fumed silica particles have a specific gravity of 2.1-2.2 g/cm³;
the ink composition has a viscosity of 2,000-40,000 mPa.s; and
provided that the ink composition is essentially free of polyamideimide (PAI).

In one embodiment, the ink composition of the present invention comprises non-volatile components including:
(a) 30-90 weight % of the fluoropolymer selected from PTFE, PFA, FEP, and mixtures thereof;
(b) 0-50 weight % of the colorant selected from organic pigments, inorganic pigments, and mixtures thereof; and
(c) 2-25 weight % of fumed silica particles;
wherein the weight % is based on the total weight of the non-volatile components.

In one embodiment, the ink composition of the present invention further comprises additives selected from the group consisting of anti-foamers or defoamers, wetting agents, leveling agents, dispersing agents, pH regulators, fillers, film formers, anti-gelling agents, anti-settling agents, and mixtures thereof.

In one embodiment, the ink composition of the present invention has a viscosity of 5,000-30,000 mPa.s, or 8,000-20,000 mPa.s.

In some embodiments, in the ink composition of the present invention, the colorant (b) is an inorganic pigment selected from the group consisting of titanium dioxide, iron aluminum titanate, iron oxide, carbon black, ultramarine blue, mica coated with titanium dioxide, and combinations thereof.

In one embodiment, in the ink composition of the present invention, the fumed silica particles (c) have a B.E.T. surface area ranging from 100 to 450 m²/g, or 150-400 m²/g.

In one embodiment, in the ink composition of the present invention, the nonionic surfactant (d) is a compound or a mixture of compounds of the formula:

R(OCH₂CH₂)ₙOH

wherein R is a branched alkyl, branched alkenyl, cycloalkyl, or cycloalkenyl hydrocarbon group having 8-18 carbon atoms and n is an average value of 4 to 18.

In one embodiment, in the ink composition of the present invention, the nonionic surfactant (d) is an ethoxylate of 2,6,8-trimethyl-4-nonanol having an average of 4 to 18 ethylene oxide (EO) units or a mixture thereof.

This invention further provides a method for manufacturing a coated substrate comprising a non-stick coating having a pattern, wherein the method comprises:
A) applying a primer composition to a substrate and drying to form a primer coat;
B) optionally, applying a midcoat composition and drying to form a midcoat;
C) curing said primer coat and optional midcoat;
D) applying an ink composition to form a pattern, wherein said pattern comprises fumed silica particles;
E) applying a topcoat composition and drying to form a topcoat;
F) curing said topcoat;
wherein the ink composition comprises:
(i) 25-65 weight % of a fluoropolymer selected from PTFE, PFA, FEP, and mixtures thereof;
(ii) 0-25 weight % of a colorant selected from organic pigments, inorganic pigment, and mixtures thereof;
(iii) 1-15 weight % of amorphous silica particles;
(iv) 1-15 weight % of a nonionic surfactant, wherein the nonionic surfactant comprises at least one aliphatic alcohol ethoxylate, or a mixture thereof; and
(v) 10-50 weight % of a liquid carrier selected from water, water-miscible solvents and mixtures thereof;
wherein the weight % is based on the total weight of the ink composition;
the fumed silica particles have a specific gravity of 2.1-2.2 g/cm³;
the ink composition has a viscosity of 2,000-40,000 mPa.s; and
provided that the ink composition is essentially free of polyamideimide (PAI).

In one embodiment, in the method of the present invention, the fumed silica particles have a BET surface area ranging from 100 to 450 m²/g, or 150-400 m²/g.

In one embodiment, in the method of the present invention, the ink composition has a viscosity of 5,000-30,000 mPa.s, or 8,000-20,000 mPa.s.

In one embodiment, in the method of the present invention, the primer coat, the optional midcoat and the topcoat of the non-stick coating, each independently comprises at least a fluoropolymer component selected from PTFE, PFA, FEP, and mixtures thereof.

In one embodiment, in the method of the present invention, the ink composition is applied by pad printing, screen printing, roller coating or coil coating.

### BRIEF DESCRIPTION OF THE DRAWINGS

Figure 1 is a decorative pattern formed by applying the ink of the present invention using a screen printing method, which is an example of the present invention.
Figure 2 is a marking formed by applying the ink of the present invention using a pad printing method, which is an example of the present invention.
Figure 3 shows the enlarged partial images of decorative patterns with different resolution ratings; the pictures were taken under microscope.

Various other features, aspects, and advantages of the present invention will become more apparent with reference to the following description, examples, and appended claims.

### DETAILS OF THE INVENTION

Unless otherwise defined, all technical and scientific terms used herein have the same meaning as commonly understood by one of ordinary skill in the art to which this invention belongs. In case of conflict, the present specification, including definitions, will control.

Except where expressly noted, trademarks are shown in upper case.

Unless stated otherwise, all percentages, parts, ratios, etc., are by weight.

As used herein, the term "pattern" is intended to include, without limitation, "pattern", "decorative pattern", "design", "logo", "marking", "label" or any other pattern, characters, letters, numbers that may or may not convey useful or meaningful information.

As used herein, the term "produced from" is synonymous to "comprising". As used herein, the terms "comprises," "comprising," "includes," "including," "has," "having," "contains" or "containing," or any other variation thereof, are intended to cover a non-exclusive inclusion. For example, a composition, process, method, article, or apparatus that comprises a list of elements is not necessarily limited to only those elements but may include other elements not expressly listed or inherent to such composition, process, method, article, or apparatus.

The transitional phrase "consisting of' excludes any element, step, or ingredient not specified. If in the claim, such a phrase would close the claim to the inclusion of materials other than those recited except for impurities ordinarily associated therewith. When the phrase "consisting of' appears in a clause of the body of a claim, rather than immediately following the preamble, it limits only the element set forth in that clause; other elements are not excluded from the claim as a whole.

The transitional phrase "consisting essentially of' is used to define a composition, method or apparatus that includes materials, steps, features, components, or elements, in addition to those literally discussed, provided that theses additional materials, steps features, components, or elements do not materially affect the basic and novel characteristic(s) of the claimed invention. The term "consisting essentially of' occupies a middle ground between "comprising" and "consisting of."

The transitional phrase "essentially no" components or "essentially free" of components, it is meant that the compositions of the invention should contain less than 1% by weight, or less than 0.1% by weight, or preferably zero percent by weight, of the components, based on the total weight of the compositions.

The term "comprising" is intended to include embodiments encompassed by the terms "consisting essentially of' and "consisting of'. Similarly, the term "consisting essentially of' is intended to include embodiments encompassed by the term "consisting of."

When an amount, concentration, or other value or parameter is given as either a range, preferred range or a list of upper preferable values and lower preferable values, this is to be understood as specifically disclosing all ranges formed from any pair of any upper range limit or preferred value and any lower range limit or preferred value, regardless of whether ranges are separately disclosed. For example, when a range of "1 to 5" is recited, the recited range should be construed as including ranges "1 to 4", "1 to 3", "1-2", "1-2 & 4-5", "1-3 & 5", and the like. Where a range of numerical values is recited herein, unless otherwise stated, the range is intended to include the endpoints thereof, and all integers and fractions within the range.

When the term "about" is used in describing a value or an end-point of a range, the disclosure should be understood to include the specific value or end-point referred to.

Further, unless expressly stated to the contrary, "or" refers to an inclusive "or" and not to an exclusive "or". For example, a condition A "or" B is satisfied by any one of the following: A is true (or present) and B is false (or not present), A is false (or not present) and B is true (or present), and both A and B are true (or present).

Also, the indefinite articles "a" and "an" preceding an element or component of the invention are intended to be nonrestrictive regarding the number of instances (i.e. occurrences) of the element or component. Therefore "a" or "an" should be read to include one or at least one, and the singular word form of the element or component also includes the plural unless the number is obviously meant to be singular.

In describing and/or claiming this invention, the term "homopolymer" refers to a polymer derived from polymerization of one species of monomer; "copolymer" refers to a polymer derived from polymerization of two or more species of monomers. Such copolymers include dipolymers, terpolymers or higher order copolymers. The term "polymer" includes both homopolymer and copolymer unless specified, which may also worded as "(co)polymer."

In describing certain polymers it should be understood that sometimes applicants are referring to the polymers by the monomers used to produce them or the amounts of the monomers used to produce the polymers. While such a description may not include the specific nomenclature used to describe the final polymer or may not contain product-by-process terminology, any such reference to monomers and amounts should be interpreted to mean that the polymer comprises those monomers (i.e. copolymerized units of those monomers) or that amount of the monomers, and the corresponding polymers and compositions thereof.

Herein, the unit of viscosity, mPa.s, is equivalent to the non-SI viscosity unit, centipoise.

Embodiments of the present invention as described in the Summary of the Invention include any other embodiments described herein, can be combined in any manner, and the descriptions of variables in the embodiments pertain not only to the ink compositions of the present invention, but also to the coated substrates and methods for manufacturing coated substrates of the present invention.

The materials, methods, and examples herein are illustrative only and, except as specifically stated, are not intended to be limiting. Although methods and materials similar or equivalent to those described herein can be used in the practice or testing of the present invention, suitable methods and materials are described herein.

The invention is described in detail hereinunder. First mentioned are the components (a) to (e) or (i) to (v) constituting the ink composition of the invention.

### Fluoropolymer (a) or (i)

With respect to the fluoropolymer, the following description applies to the fluoropolymer (a) or (i) of the ink compositions, as well as the fluoropolymer components that may be present in the primer coat, the optional midcoat, and the topcoat.

The fluoropolymer is a fluorocarbon resin. The fluoropolymer can be non melt-processible fluoropolymer with a melt creep viscosity of at least 1x10⁷ Pa·s at 380°C. One embodiment is polytetrafluoroethylene (PTFE) having a melt creep viscosity of at least 1x10⁷ Pa·s at 380°C with the highest heat stability among the fluoropolymer.

Such non melt-processible PTFE can also contain a small amount of comonomer modifier which improves film-forming capability during baking (fusing), such as perfluoroolefin, notably hexafluoropropylene (HFP) or perfluoro(alkyl vinyl) ether, notably wherein the alkyl group contains 1 to 5 carbon atoms, with perfluoro(propyl vinyl ether) (PPVE) being preferred. The amount of such modifier will be insufficient to confer melt-processible to the PTFE, generally being no more than 1 mole %, preferably less than 0.5 mol %. The PTFE, also for simplicity, can have a single melt creep viscosity, usually at least 1x10⁸ Pa·s, but a mixture of PTFE's having different melt viscosities can be used.

While PTFE is preferred, the fluoropolymer can also be melt-processible fluoropolymer, either combined (blended) with the PTFE, or in place thereof. Examples of such melt-processible fluoropolymers include copolymers of TFE and at least one fluorinated copolymerizable monomer (comonomer) present in the polymer in sufficient amount to reduce the melting point of the copolymer substantially below that of TFE homopolymer, PTFE, e.g., to a melting temperature no greater than 315°C. Preferred comonomers with TFE include the perfluorinated monomers such as perfluoroolefins having 3-6 carbon atoms and perfluoro(alkyl vinyl ethers) (PAVE) wherein the alkyl group contains 1-5 carbon atoms, especially 1-3 carbon atoms. Especially preferred comonomers include hexafluoropropylene (HFP), perfluoro(ethyl vinyl ether) (PEVE), perfluoro(propyl vinyl ether) (PPVE) and perfluoro(methyl vinyl ether) (PMVE). Preferred TFE copolymers include FEP (TFE/HFP copolymer), PFA (TFE/PAVE copolymer), TFE/HFP/PAVE wherein PAVE is PEVE and/or PPVE and MFA (TFE/PMVE/PAVE wherein the alkyl group of PAVE has at least two carbon atoms). The molecular weight of the melt-processible tetrafluoroethylene copolymers is unimportant except that it is sufficient to be film-forming so as to have integrity in printing/coating application. Typically, the melt viscosity will be at least 1x10² Pa·s and may range up to about 60-100x10³ Pa·s as determined at 372°C according to ASTM D-1238.

The fluoropolymer (a) or (i) of the inventive ink composition is selected to be sufficiently compatible with the fluoropolymer components in the primer coat and overcoat layers (i.e. optional midcoat and topcoat layers) to accomplish strong intercoat adhesion upon baking when fluoropolymer components are present in adjacent layers.

A preferred fluoropolymer (a) or (i) of the inventive ink composition is a blend of non melt-processible fluoropolymer having for example a melt creep viscosity in the range from 1x10⁷ to 1x10¹¹ Pa·s and melt-processible fluoropolymer having for example a viscosity in the range from 1x10³ to 1x10⁵ Pa·s to provide improved smoothness and better adhesion to the non-stick coats that it would be applied to.

In some embodiments, in the ink composition of the present invention, the fluoropolymer (a) or (i) consists of PTFE, or FEP, or PFA, or mixtures thereof. In some embodiments, in the ink composition of the present invention, fluoropolymer composition (a) or (i) contains a PTFE content of about 70 wt % to about 99 wt % and a PFA content of about 1 wt % to about 30 wt %, based on the total solids of said PTFE and PFA. In other embodiments, in the ink composition of the present invention, fluoropolymer composition (a) or (i) contains a PTFE content of about 70 wt % to about 99 wt % and a FEP content of about 1 wt % to about 30 wt %, based on the total solids of said PTFE and FEP.

The fluoropolymer is generally commercially available as a dispersion of the polymer in water, which is the preferred form for the ink composition as well as the compositions of the undercoat, optional midcoat, and topcoat used in the present invention, both for ease of application and environmental acceptability. By "dispersion" is meant that the fluoropolymer resin particles are stably dispersed in the aqueous medium, so that settling of the particles does not occur within the time when the dispersion will be used. This is achieved by the small size of the fluoropolymer particles, typically on the order of less than 0.5 µm, and the use of surfactant in the aqueous dispersion by the dispersion manufacturer. Such dispersions can be obtained directly by the process known as aqueous dispersion polymerization, optionally followed by concentration and/or further addition of surfactant. The solids contents of the fluoropolymer dispersion typically can be increased from about 35 wt % to about 65 wt % after concentration.

Another liquid medium of the fluoropolymer that may be used to form any of the layers described above is the dispersion of the fluoropolymer in an organic liquid. This is particularly useful when the fluoropolymer is PTFE micropowder, which is a low molecular weight PTFE that has melt-flowability. PTFE micropowder can be used in aqueous dispersion form as well. The aqueous dispersions of fluoropolymer described above can include water-miscible organic liquid. One skilled in the art can select suitable water-miscible organic liquid without further elaboration.

In one embodiment, submicron particles (dispersion particles) and larger particles (powder particles) are both present in the fluoropolymer component of one or more of the non-stick layers.

In one embodiment, submicron particles (dispersion particles) and larger particles (powder particles) are both present in the fluoropolymer component of each non-stick layer.

Examples of commercially available PTFE dispersions include Teflon® PTFE TE-3916, TE-3919, TE-3891, TE-3862 and Teflon® PTFE TE-3926supplied by DuPont; and Fluon® PTFE AD911, AD912, or AD938 supplied by AGC Chemicals.

Examples of commercially available PFA supplied by DuPont include dispersions such as Teflon® PFA TE-7233, TE-3926, TE-7224, TE-7252, TE-7253 and TE-7254; and PFA powders such as Teflon® 532-5011, 532-5010, 532-5310, and 532-7410.

Examples of commercially available FEP dispersions include Teflon® FEP TE-9827, TE-9568, TE-9573, TE-9575, and TE9576 supplied by DuPont; Neoflon ND-110 available from Daikin. Examples of commercially available FEP powders include Teflon® FEP 532-8000, 532-8110 and 532-8410 supplied by DuPont.

In some embodiments, in the ink composition of the present invention, the fluoropolymer (a) or (i) is in an amount of about 25-65 weight %, or from about 30-55 weight %, or from about 35-45 weight %, based upon the total weight of the ink composition.

In other embodiments, in the ink composition of the present invention, the fluoropolymer (a) or (i) is in an amount of about 30-90 weight %, or from about 40-85 weight %, or from about 50-80 weight %, based upon the total weight of the non-volatile components of the ink composition.

### Colorant (b) or (ii)

With respect to colorants that may be present in the ink compositions of the present invention, such colorants include organic or inorganic pigments and these can be agglomerated or non-agglomerated. Colorants are finely divided particles imparting color that are insoluble but wettable under the conditions of use. Colorants are available as powder or may be dispersed and grinded in a suitable solvent, typically in water. If the colorant is a water-based dispersion, then a small amount of one or more dispersants and/or grinding aids may be present such as a polymer grind vehicle or surfactant additive, the use of which will be familiar to one skilled in the art. Preferably, the colorant (b) is an inorganic pigment for purposes of excellent heat stability. Metallic pigments like aluminum powder (aluminum bronze) and copper-zinc alloy powder (gold bronze) may be used in novel silver and gold inks. Miscellaneous inorganic pigments may provide luminescent and pearlescent effects. Other inorganic materials such as clays, mica serve as fillers or extenders, which primarily reduces the cost of pigments. For example, flakes of mineral mica (lower refractive index) coated with layers of titanium dioxide (higher refractive index) are found in pearlescent pigments.

Since most of the non-stick coatings are of dark colors such as black or dark grey, the inventive ink composition may require no colorant to form visible patterns on the non-stick coatings. Typically, the ink compositions may be either white or colors other than the primer coat or the optional midcoat; for example, titanium dioxide (TiO₂) or mica coated with TiO₂ for white color, iron aluminum titanate for yellow or golden color, iron oxide for red color, carbon black for black color, and ultramarine blue for blue color. It is to be understood that other useful colorants will become readily apparent to one of skill in the art based on the present disclosure.

In some embodiments, the colorant (b) is an inorganic pigment selected from the group consisting of titanium dioxide, iron aluminum titanate, iron oxide, carbon black, ultramarine blue, mica coated with TiO₂, and combinations thereof.

Useful colorants include pigments in water-based dispersions such as those manufactured by E.M.D Chemicals under the trade name "Iriodin", for example, 231 rutile fine green, 221 fine satin blue, 225 rutile blue pearl, 504 red, and 153 NDW-D flash pearl, which can be dispersed in water and/or surfactant prior to use.

In one embodiment, the ink composition of the present invention comprises no colorant (b) or (ii). In some embodiments, in the ink composition of the present invention, the colorant (b) or (ii) is in an amount of about 0.1-25 weight %, or from about 2-20 weight %, or from about 5-15 weight %, based upon the total weight of the ink composition.

In other embodiments, in the ink composition of the present invention, the colorant (b) or (ii) is in an amount of 0.1-50 weight %, or from about 10-45 weight %, or from about 20-40 weight %, based upon the total weight of the non-volatile components of the ink composition.

### Amorphous (fumed) silica particles (c) or (iii)

Inks should have a viscosity appropriate to the printing process & equipment. Most inks exhibit pseudoplasticity, which essentially means that they become less viscous when subjected to shear forces, such as stirring, spraying or spreading. To impart a suitable viscosity of the ink compositions of the present invention, a thixotropic agent is used. Other properties that may be imparted depending on the kind of thixotropic agents include aiding film formation, anti-settling, anti-sagging, etc. Known thixotropic agents include cellulose based polymers, polyacrylates, polyurethanes, polyesters and inorganic agents.

Extremely fine particle size silica (i.e. silicon dioxide) is found to be suitable as a thixotropic agent in the inventive ink composition. The extremely fine particle size thixotropic agent has a sub-micron particle size, in one embodiment, about 0.1 to about 0.5 micron, or about 0.2 to about 0.4 micron. More specifically, these amorphous silica particles have a B.E.T. surface area in a range of about 100-450 m²/g, or about 150-400 m²/g. "B.E.T. surface area" also known as "specific surface area" means the surface area per unit weight of a particulate solid as determined by the B.E.T. (Brunauer, Emmett, and Teller) method.

Preferably, suitable amorphous silica particles have untreated hydrophilic surfaces, and, when blended into the aqueous ink composition of the present invention, they provide not only the proper viscosity and pseudoplasticity of the ink, but also reduce settling during storage. Due to the white appearance of amorphous silica particles, the ink composition may require no other colorant when the desired ink color is white and the amount of the amorphous silica particles is adequate. Furthermore, untreated synthetic amorphous silica (SAS) is generally recognized as safe (GRAS) by both the US FDA and EFSA for use in coatings with indirect food contact, with no amount limit specified.

The amorphous silica particles are also known as fumed silica that can be prepared by, for example, vapor-phase hydrolysis of a silicon compound such as silicon tetrachloride. Note that the amorphous appearance of the silica particles is observed typically by X-ray. The amorphous silica particles are fluffy powder in white color and have a specific gravity of 2.1-2.2 g/cm³.

Suitable fumed silica particles include, for example, products sold under the tradename AEROSIL® series -200, -300, and -380 available from Evonik Degussa AG, (Hanau, Germany), CAB-O-SIL® series M5, M-5P and EH-5 available from Cabot Corp (Tuscola, Ill.), and HDK® types, e.g. HDK-N20, HDK-T30, and HDK-T40 available from Wacker Chemie AG (Munich, Germany).

In some embodiments, in the ink composition of the present invention, the amorphous silica particles (c) or (iii) are in an amount of about 1 to about 15 weight %, or from about 2 weight % to about 10 weight %, or from about 3 weight % to about 8 weight %, based upon the total weight of the ink composition.

In other embodiments, in the ink composition of the present invention, the amorphous silica particles (c) or (iii) are in an amount of about 2 weight % to about 25 weight %, or from about 3 weight % to about 20 weight %, or from about 4 weight % to about 15 weight %, based upon the total weight of the non-volatile components of the ink composition.

### Nonionic Surfactants (d) or (iv)

With respect to nonionic surfactants that may be present in the ink compositions of the present invention, suitable nonionic surfactants are those that can be burned off cleanly without thermally decomposing on a substrate and leaving lower residuals. Preferably, the nonionic surfactants (d) or (iv) used in the ink compositions of the invention are aliphatic alcohol ethoxylates or mixtures thereof, which provide desired properties in the ink composition, e.g., low burn off temperature, dispersion stability, and low viscosity. For simplicity of the ink compositions, the nonionic surfactants as described herein are those typically used to stabilize the fluoropolymers (a) or (i) which are dispersed in aqueous medium.

Preferred aliphatic alcohol ethoxylates are one or more compounds of the formula:

R(OCH₂CH₂)ₙOH

wherein R is a branched alkyl, branched alkenyl, cycloalkyl, or cycloalkenyl hydrocarbon group having 8-18 carbon atoms and n is an average value of 4 to 18.

Especially preferred nonionic surfactants are ethoxylates of saturated or unsaturated secondary alcohols having 8-18 carbon atoms. Secondary alcohol ethoxylates possess advantages over both primary alcohol ethoxylates and phenol ethoxylates including lower aqueous viscosities, more narrow gel ranges, and less foaming. Moreover, ethoxylates of secondary alcohols provide improved surface tension lowering and thus excellent wetting in end use applications such as coating operations. In addition to the above advantages, the preferred alkyl alcohol ethoxylates burn off at a lower temperature (about 50°C lower) than the conventional alkyl phenol ethoxylates.

In a preferred form of the aqueous dispersion employed in accordance with the invention, the nonionic surfactant is an ethoxylate of 2,6,8-trimethyl-4-nonanol having an average of about 4 to about 18 ethylene oxide (EO) units, most preferably, ethoxylates of 2,6,8-trimethyl-4-nonanol having an average of about 6 to about 12 ethylene oxide units, or mixture thereof.

Examples of preferred surfactants of this type are those sold under the trade name Tergitol™, for example, TMN-6 (nominally 6 EO units, HLB value is 13.1) and TMN-10 (nominally 10 EO units, HLB value is 14.4), these are available from Dow Chemical Corporation. A blend of Tergitol™ TMN-6 and Tergitol™ TMN-10 is also available from Dow Chemical Corporation as Tergitol™ TMN-100X (HLB value is 14.1).

In one embodiment, the nonionic surfactant (d) or (iv) of the ink composition employed in the invention is a mixture of 2,6,8-trimethyl-4-nonanol ethoxylates.

The nonionic surfactants (d) or (iv) are generally present in the ink composition of this invention in amounts of about 1-15 weight %, or about 4-12 weight %, or about 6-10 weight %, based on the weight of the ink composition.

### Liquid carrier (e) or (v)

With respect to liquid carrier (e) or (v) that may be present in the ink compositions of the present invention, the liquid carrier may be water, water-miscible solvents and mixtures thereof.

Examples of water-miscible organic liquid include lower alcohols such as methanol, ethanol, 2-propanol, 1-butanol, and diacetone alcohol; glycols and polyols such as propylene glycol and glycerin; glycol ethers such as butyl carbitol and butyl cellosolve; ketones such as methyl isobutyl ketone, and methyl ethyl ketone; esters such as gamma-butyrolactone and epsilon-caprolactone; amides such as N-methyl-2-pyrrolidone, N,N-dimethylacetamide, N,N,-dimethylacetoacetamide, and N,N-dimethylformamide. One or more thereof can be used. As the liquid carrier, further, a mixed solvent of water and the above-mentioned water-miscible organic liquid can be used.

Notably, glycols and coalescing agents that are designed to modify film formation temperature or drying speed may also be used in these waterborne inks. Useful coalescing agents include oxide-based glycol ether solvents, such as ethylene glycol monomethyl ether, ethylene glycol monoethyl ether, ethylene glycol monopropyl ether, butyl carbitol, dipropylene glycol dimethyl ether, and butyl glycol, butyldiglycol, and ester-based solvents such as ethylene glycol monobutyl ether acetate, diethylene glycol monoethyl ether acetate, methoxypropylacetate and butyl cellosolve actetate.

In addition to providing a suitable viscosity for a specific application method, the liquid carrier (e) or (v) of the ink composition preferably can provide a printed image of high definition repeatedly without cleaning the applicator.

In some embodiments, in the ink composition of the present invention, the liquid carrier (e) or (v) is in an amount of about 10-50 weight %, or from about 20-40 weight %, based upon the total weight of the ink composition.

### Other Additives

The ink composition according to the present invention may contain other additives as required in order to improve its properties or workability, such as, for example, anti-foamers (preventing foam formation) or defoamers (reducing foam), wetting agents, leveling agents, dispersing agents, pH regulators, fillers, film former, anti-gelling agents, anti-settling agents, or mixtures thereof.

Suitable anti-foamers or defoamers include silicone-based and non-silicone-based defoamers. Silicones-based defoamers in aqueous emulsion are preferred for the inventive ink compositions, e.g., Silfoam® SE 21 (available from Wacker Chemie AG, MI, USA). Non-silicone based defoamers contain mainly mineral oil based materials and non-mineral oil based materials which may be emulsified with hydrophobic solids, e.g., Rhodaline® 680 (available from Rhodia Group,), BYK-035 or BYK-020 (available from BYK Chemie), and Bevaloid 680 (available from Kemira).

As defoamers may create leveling and wetting problems, the use of wetting agents or spreaders can minimize or suppress these effects. Typical leveling and wetting agents include also silicone-based and non-silicone based surfactants. Silicone-based leveling and wetting agents are preferred for the inventive ink compositions, e.g., Coatosil® 77-SGS (available from Momentive Performance Materials); BYK-307, BYK-333 or BYK-DYNWET 800 (available from BYK Chemie). Typical non-silicone based wetting agents include diethylenic surfactants, alkyl surfactants and alkyl aryl ethoxylate surfactants.

Suitable fillers may include ceramic fillers, and typically are inorganic, non-metallic type materials that are inert with respect to the other components of the composition and thermally stable at its eventual baking temperature. The fillers are typically uniformly dispersible but not dissolved in the ink composition of the invention. The fillers preferably have an average particle size of no greater than about 50 micrometers. The preferred average particle size for the ceramic fillers are about 14 to 36 micrometers and most preferably, about 20 to 30 micrometers.

Examples of preferred fillers include inorganic oxides (other than silica oxide), carbides, borides and nitrides having a Knoop hardness of at least 1200. Knoop hardness is a scale for describing the resistance of a material to indentation or scratching. Preferred are inorganic oxides, nitrides, borides and carbides of zirconium, tantalum, titanium, tungsten, boron, aluminum and beryllium. Particularly preferred are silicon carbide and aluminum oxide. The preferred large ceramic particle is SiC. Another preferred large ceramic particle is Al₂O₃.

In some embodiments, the ink composition of the present invention further comprises other additives in an amount of about 0-10 weight %, or about 0.1-5.0 weight %, based on the total weight of the ink composition.

### Preparation of the Ink Composition

The ink compositions of the present invention may be prepared by methods known in the art.

Although the order of addition is not critical, typical procedures for preparing the inventive ink compositions involve charging a mixer (e.g., a blade mechanical stirrer) with fluoropolymers, surfactants, liquid carriers, colorants/pigments, and other additives such as anti-foamers, mixing for 10-60 minutes and then charging the amorphous silica particles, preservatives, pH regulators and wetting agents for another 10-60 minutes. Additional colorants/pigments, surfactants and/or liquid carriers can be added as needed to provide the desired viscosity. During the mixing process, it is important to control the mixing and loading speed carefully to avoid undesired foaming or gelling. The resultant ink composition preferably appears as an homogeneous thick slurry without gelling, foaming or aggregates.

Depending on the application method selected for the ink composition, the ink composition preferably has a viscosity of 5,000-30,000 mPa.s, or 8,000-20,000 mPa.s.

### Coated Substrates & Nonstick Coating

The substrate used in the present invention can be a metal or ceramic, examples of which include aluminum, anodized aluminum, cold-rolled steel, stainless steel, enamel, glass, and glass-ceramics (e.g., Pyroceram®). These materials may form the entire substrate or in the case of composite materials, just the surface of the substrate. The substrate can be smooth, i.e. having a surface profile of less than 1.25 µm as measured by a model RT 60 surface tester made by Alpa Co. of Milan, Italy, and needs to be clean. For glass-ceramics and some glass, improved coating results are obtained by activation of the substrate surface such as by a slight chemical etch, which is not visible to the naked eye, i.e., the surface is still smooth. The substrate can also be chemically treated with an adhesion agent such as a mist coat of polyamic acid salt, such as disclosed in U.S. Pat. No. 5,079,073 to Tannenbaum.

Products having non-stick finishes of the present invention include cookware, bakeware, rice cookers and inserts thereof, water pots, iron sole plates, conveyors, chutes, roll surfaces, cutting blades, etc.

The coated substrate of the present invention comprises multi-layered non-stick coating, preferably at least one layer (i.e., primer coat, optional midcoat, and/or topcoat) comprises a fluoropolymer component, which may be a blend of one or more fluoropolymers described above. Generally, the fluoropolymer component, when present, will comprise 10-45 wt% of the primer coat; at least 70 wt% of the optional midcoat; and at least 90 wt% of the topcoat. All of the weight percentages are based on the solids (i.e. dry film weight of each layer).

In some embodiments, each layer includes a fluoropolymer component, while in other embodiments, only one or two of these layers include a fluoropolymer component. In some embodiments, the fluoropolymer component in two, or even three layers is the same, while in other embodiments, each layer having a fluoropolymer component has a different fluoropolymer composition. In other embodiments, each layer independently comprises at least a fluoropolymer component selected from PTFE, PFA, FEP, and mixtures thereof, and the fluoropolymer component can be the same or different from the fluoropolymer (i) of the ink composition forming the pattern.

Beside the fluoropolymer component mentioned above, non-stick coating compositions may comprise other thermally stable polymer binder resistant to temperatures up to at least 140°C, such as polyamideimide (PAI), polyimide (PI), polyphenylene sulfide (PPS), polyether sulfone (PES), polyarylene-etherketone, polyetherimide, and poly(1,4(2,6-dimethylephenyl) oxide) commonly known as polyphenylene oxide (PPO). The polymer binders generally do not contain fluorine and are often used in the primer composition for promoting adhesion to the uncoated substrate. For simplicity, only one polymer binder may be used to form the adhesion promoter component, if present, of the primer composition of the present coated substrate. However, multiple polymer binders are also contemplated for use in the present coated substrate. Preferred polymer binders are at least one such polymer selected from the group consisting of PAI, PES, and PPS.

As the inventive ink composition is applied to the primer coat and/or midcoat, there is no need to add adhesion promoter component such as PAI. Notably, the present ink composition is essentially free of polyamideimide (PAI). In one embodiment, the ink composition comprises polyamideimide in an amount less than 1% by weight, or less than 0.1% by weight, or preferably zero percent by weight, based on the total weight of the ink compositions.

Other ingredients that can be present in the non-stick coating compositions are also known to one skilled in the art and include pigments, fillers, etc.

### Method of Manufacturing the Coated Substrates

With regards to applying nonstick coating compositions for each layer to the substrate, spray and roller applications forming each layer are the most convenient methods. Other well-known coating methods, including dipping and coil coating, are suitable.

The optional midcoat composition can be applied by conventional methods onto the primer layer prior to its drying. When the primer and midcoat compositions are both aqueous dispersions, the midcoat composition can be applied to the primer layer preferably after drying to touch. However, when the primer coat is made by applying the primer composition from an organic solvent, and the midcoat layer is applied from an aqueous medium, the primer layer should be dried so that all water-incompatible solvent is removed before application of the midcoat composition. The drying temperatures for the primer coat and/or midcoat generally range from about 60-200°C and the drying time ranges from 3-20 minutes.

Prior to applying the ink composition, the existing coat(s) should be cured, for example, at 105-420°C for 3-20 minutes, in order to provide a pattern with high definition (or resolution) and avoid damaging the nonstick coating surface during printing operation.

The inventive ink composition comprising amorphous silica particles can be applied in any pattern for producing discrete images forming desired decorative patterns, markings and labels. The inventive ink composition can be applied to a coated substrate having non-stick surface by methods known to one skilled in the art including pad printing, screen printing, roller coating, coil coating and the like. Preferable application methods include pad printing and screen printing.

In one embodiment, the pattern is formed by applying the ink composition by pad printing and screen printing.

A typical pad printing process involves the following: a cliché is first formed with a pattern etched in the surface of the cliché. The inventive ink composition is then applied into the etchings of the cliché, and when a print pad is subsequently pressed against the surface of the cliché, the ink in the etchings of the cliché is transferred to the surface of the print pad. Afterwards, the pattern inked print pad is pressed against the primer coat and/or the midcoat layer of the coated substrate to form the desired pattern. Clichés used in the present invention may be made of ceramics or metals (e.g. steel). Patterns can be etched into a cliché according to any methods known to a person skilled in the art, for example, by chemical etching or laser ablation or the like. The clichés may be cleaned after use, such as soaking in an appropriate solvent, sonication, or mechanical abrasion. A cleaning step is particularly preferred in case of shallower clichés (e.g. 20 µm depth), where ink buildup might cause a more rapid degradation of the pattern.

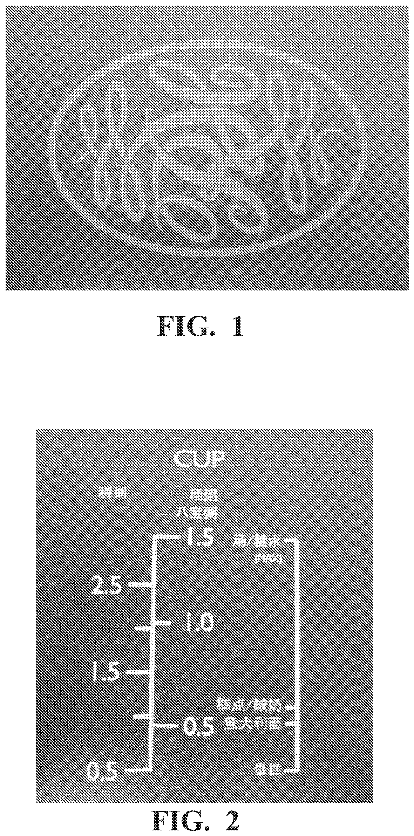

A typical screen printing process involves the following: the inventive ink composition can be placed on the printing screen and pushed through the screen using a normal squeegee operation to deposit the ink composition onto the primer coat and/or the midcoat layer of the coated substrate. A screen process according to one embodiment includes placing the screen over a coated substrate, in which the screen has a mesh size of preferably 400 mesh, although a screen size in the range 200 up to 600 mesh can be used. The screen mesh size can control the definition of the printed pattern. The screen is prepared with a photo-reactor resin emulsion for blocking that portion of the screen through which the ink composition is not intended to pass, leaving the pattern elements in the unblocked or open screen areas that represent the pattern to be printed, for example, the decorative pattern shown in Figure 1.

Depending on the application methods & equipments, the viscosity of the ink composition may be adjusted accordingly. Once decided which method, for example, by pad printing, then the desired ink viscosity may be determined by at least: (1) the characteristics of the pad printing image plate; (2) the type of artwork being printed (e.g. solid or half-tone images); (3) the characteristics of the material the pad is made from; (4) the shape of the pad; and (5) the pressure applied to the pad. Under many circumstances, it is desirable that the ink composition is thin enough to permit the ink to be squeegeed or otherwise applied well into the etched recesses of the image plate of a pad printer. Solid art such as lines, text, and solid shapes can use a more viscous ink than halftone art. Halftone art requires a less viscous ink as it contains finer details on the image plate (cliché) which the ink must be able to flow into.

Ink compositions for printing operations will preferably have one or more of the following characteristics: viscosity lower than about 40,000 mPa.s, preferably lower than about 30,000 mPa.s and most preferably below about 20,000 mPa.s; prolonged stability (i.e., stable for about 4 hours, preferably at least 8 hours, more preferably 24 hours, even more preferably at least 7 days, most preferably at least 1 month); an appropriate color level (visible by eye); and good adhesion to non-stick coating. It should be noted that the physical stability of an ink composition can differ from its chemical stability. For example, pigments may settle from the ink composition (physical phenomenon) yet the ink composition may not have undergone any significant chemical reaction. For such situations the ink composition can be restored to a useable state by simply stirring or remixing. Other means of slowing or eliminating settling of pigments include but are not limited to use of additives, altering pH, in-line mixing, refrigeration, altering particle size of pigments, and coating pigment of pigment particles.

Finally, a topcoat composition is wet-applied over the ink printed substrate, then subject to drying at about 60-200°C. The resultant composite layered structure can be cured, for example, at about 330-450°C for 3-30 min to fuse all the coatings at the same time to form a non-stick finish having a pattern on the coated substrate.

When the fluoropolymer is PTFE, a quick high cure temperature is preferred, e.g., for 5 minutes at a temperature starting at 427°C and rising to 435°C. When the fluoropolymer in the primer or the optional midcoat is a blend of PTFE and FEP, e.g., 50-70 wt % PTFE and 50-30 wt % FEP, the cure temperature may be reduced to 415°C, rising to 427°C in 3 minutes (total curing time).

The resultant coated substrate preferably has a primer layer that is no greater than 20 µm thick, more preferably 5-15 µm thick. Preferably the midcoat layer, if present, is thicker than the primer layer and is more preferably at least 50% thicker. Preferably the midcoat layer is 10-25 µm. Depending on the application method and the ink composition, the thickness of the pattern is preferably about 5-15 µm thick and in one embodiment from about 7-10 µm. Preferably the topcoat layer is 5-12 µm thick. The thickness of the layers that contain large ceramic fillers can be measured by the eddy-current principle (ASTM B244) after baking.

These aspects of the invention are produced, in part, by the formulation of the ink composition which comprises the fluoropolymer (a) or (i), optional colorants (b) or (ii), amorphous silica particles (c) or (iii) as the thixotropic agent, surfactants (d) or (iv) and liquid carrier (e) or (v).

### EXAMPLES

The abbreviation "E" stands for "Example" and "CE" stands for "Comparative Example" and each is followed by a number indicating in which example the aqueous dispersion is prepared. The examples and comparative examples were all prepared and tested in a similar manner. Percentages are by weight unless otherwise indicated.

### Materials

Coated substrate: the test substrates were 12 inch frying pans made of rolled aluminum that had been treated only by washing to remove grease and mechanically roughened.

Non-stick coating compositions include primer coat (Teflon® 459G-62190), midcoat (Teflon® 456G-62290) and topcoat (Teflon® 455G-62300), all manufactured by DuPont.

Ingredients of Ink Compositions are as follows:

### Fluoropolymer

(a1) Teflon® TE3916: an aqueous PTFE dispersion with a solids content of from 59 to 61 wt % and raw dispersion particle size (RDPS) of from 200 to 245 nm, is available from the DuPont Company, Wilmington, Del.
(a2) Teflon® TE3926: an aqueous PTFE dispersion with a solids content of from 59 to 61 wt % and an average particle size of 270 nm, is available from the DuPont Company, Wilmington, Del.
(a3) Teflon® TE7233: an aqueous PFA dispersion with a solids content of from 58 to 62 wt % and RDPS of from 185 to 245 nm, a melt flow rate of 1-3 g/10 min measured at 372°C, is available from the DuPont Company, Wilmington, Del.
(a4) Teflon® 532-5011: a PFA powder with a solids content of 100% and average particle size is 15 to 26 µm, a melt flow rate of 14 g/10 min measured at 372°C, is available from the DuPont Company, Wilmington, Del.
(a5) Teflon® TE9827: an aqueous FEP (TFE/HFP) dispersion with a solids content of from 54.5 to 56.5 wt % and RDPS of from 165 to 225 nm (or 150-210 nm), the resin having an HFP content of from 9.3 to 12.4 wt % and a melt flow rate of 11.8-21.3 g/10 min measured at 372°C by the method of ASTM D-1238 modified as described in U.S. Pat. No. 4,380,618, is available from the DuPont Company, Wilmington, Del.
(a6) Teflon® TE3875: an aqueous PTFE dispersion with a solids content of from 59 to 61 wt % and RDPS of from 200 to 245 nm, is available from the DuPont Company, Wilmington, Del.
(a7) Teflon® TE7224: an aqueous PFA dispersion with a solids content of from 58 to 62 wt % and RDPS of from 200 to 245 nm, is available from the DuPont Company, Wilmington, Del.

### Colorant

(b1) Mearlin magnapearl 2000: white mica pearl flake, manufactured by BASF.
(b2) Ti-Pure R-900: rutile titanium dioxide, manufactured by DuPont Titanium Technology.
(b3) Iriodin® 504 red: mica coated with iron oxide, manufactured by E.M.D. Chemicals.
(b4) Ferroxide™ Red 212P: synthetic red iron oxide, manufactured by Rockwood Pigments.
(b5) Ultramarine 5016: blue pigment, purchased from Long Light Chemical.
(b6) Iriodin® 225 rutile blue pearl: mica coated with rutile titanium dioxide, manufactured by E.M.D. Chemicals.
(b7) Iriodin® 221 fine satin blue: mica coated with titanium dioxide, manufactured by E.M.D. Chemicals.
(b8) MPC Channel black: FDA approved carbon black, manufactured by Keystone Aniline Corp.

### Amorphous silica particles (c)

(c1) CAB-O-SIL M-5: amorphous, untreated fumed silica, CAS No. 112945-52-5, has a BET surface area of 200 m²/g, average particle size (aggregate) ranges 0.2-0.3 microns, purchased from Shanghai Twin Star Co. Ltd.
(c2) MinSil 20: amorphous, untreated fumed silica, has a BET surface area of <3 m²/g, a volume average particle size of 19 microns and a median particle size of 13 microns, obtained from Minco Corp.

### Nonionic Surfactant (d)

(d1) Tergitol™ TMN-10: a nonionic surfactant, has nominally 11 EO units/mole, HLB 14.4, and a cloud point of 76°C, purchased from Dow Chemical.
(d2) Tergitol™ TMN-6: a nonionic surfactant, has nominally 8 EO units/mole, HLB 13.1, and a cloud point of 36°C, purchased from Dow Chemical.

### Liquid Carrier (e)

(e1) Propylene glycol: CAS No.57-55-6, purchased from Dow Chemical.
(e2) Glycerine: 99.7%, CAS No.56-81-5, purchased from Univar.
(e3) Butyl cellosolve: diethylene glycol monobutylether, CAS No. 112-34-5, purchased from Univar.
(e4) EMERSOL 213: Oleic acid, CAS No. 112-80-1, purchased from BASF.

### Other Additives

(f1) Antifoam emulsion SE21: a silicone-based antifoamer, purchased from Wacker.
(f2) Tamol™ SN: a dispersing agent useful in grinding colorants, sodium polynapthalene sulfonate, purchased from Univar.
(f3) Rhodaline® 680: an oil-based nonionic defoamer, purchased from Rhodia.
(f4) Cerium 2-ethylhexanoate: also known as cerium octoate, CAS no. 24593-34-8, purchased from Shepherd.
(f5) Coatosil® 77-SGS: a silicone-based antifoamer or wetting agent, an aqueous emulsion, 17 wt% of solids, purchased from Momentive Performance Materials.
(f6) Triethanolamine: CAS No. 102-71-6, used to adjust pH, purchased from Dow Chemical.
(f7) Acrysol DR-5500: 30% acrylic polymer emulsion in water, used as a thixotropic agent or a thickener, manufactured by Dow Chemical.

### General Procedure for Preparation of the Ink Composition

The fluoropolymer aqueous dispersions (PTFE dispersion, PFA dispersion, and/or FEP dispersion) were loaded to a 1000 mL stainless steel beaker and defoamed by turning off the blender for some time. Water and nonionic surfactant(s) were added and mixed for 10 minutes to yield a thin mixture. To the mixture, about half of the specified amount for the amorphous silica particles and a quarter of the specified amount for the antifoamer were added slowly, mixed for 15 minutes; followed by adding triethanolamine (to adjust pH), pigment dispersion and/or pigments, a second quarter of the specified amount for the antifoamer, a quarter of the specified amount for the amorphous silica particles and a third quarter of the specified amount for the antifoamer, and mixed for 15 minutes. The remaining amorphous silica particles and remaining antifoamer were added, and mixed for another 10 min to form a thick mixture. Lastly, liquid carriers, film formers, nonionic surfactants and other additives were added to adjust the viscosity, and mixed for 20 minutes to obtain an ink composition. The viscosity of the ink composition was measured and the result was recorded. During each stage of mixing, the stirring speed was controlled to avoid foaming.

All ink compositions were prepared similarly; the specified amounts of each ingredient for the examples and comparative examples are listed in Table 1.

### General Procedure for Preparation of the Test Pan having Decorative Pattern

A) For test pans having 2-coat system (primer coat/(decorative)/topcoat) as the final nonstick coating: Teflon®459G-62190 was used as primer composition which was sprayed on to the test pans using a spray gun, dried at 105°C for 15 minutes, and cured at 105-420°C for 3-20 minutes. The thickness of the primer coat was about 8-15 µm.
   For test pans having 3-coat system (primer coat/midcoat(decorative)/topcoat) as the final nonstick coating: Teflon® 459G-62190 as primer composition was sprayed to the test pans as described above, dried at 105°C for 15 minutes; then Teflon® 459G-62290 as the midcoat composition was applied, and dried at 105°C for 15 minutes and cured at 230°C for 3-20 minutes. The thickness of the primer coat was about 8-15 µm and the thickness of the midcoat was about 10-20 µm.
B) Printing
   A steel cliché having a marking of characters (line width of about 440 µm) and numbers (line width of about 900 µm) was provided (see Figure 2) and pad printing was performed using a pad printing machine SP-818D (manufactured by Dongguan Ever Bright Printing Machine Factory Co., Ltd., China), equipped with an ink basin of 37 cm (L), 15.8 cm (W) and 2.7 cm (D). For a single print, four steps are involved including inking the cliché, scraping off excess ink from the surface of the cliché with a blade, padding the cliché with a silicone rubber pad, and pressing the inked pad against the nonstick surface of the test pan to transfer the desired pattern (or characters/ marking). The printing process was done at ambient temperature (20-25°C). The pattern generally was dried enough without an additional heating step.
C) Teflon® 455G-62300 (manufactured by DuPont) was used as a clear topcoat composition which was applied onto the printed test pan, dried at 105°C for 15 minutes and cured at 420-440°C for 3-5 minutes. The thickness of the resulting topcoat was about 5-15 µm.

### Evaluation Methods

### Dried Film Thickness (DFT)

The baked coating thickness of each layer (primer coat, optional midcoat and/or topcoat) is measured with a film thickness instrument, e.g., Fisherscope, based on the eddy-current principle (ASTM B244).

### Viscosity

The viscosity of each ink sample, including examples and comparative examples, was measured at 25°C on a Brookfield Dial Viscometer RVT at a shear rate of 20 rpm.

The ink samples were evaluated by the following metrics.

### Performance of Ink Compositions

### A. Cliché cleanness during the printing process

1 : Too much ink residue left on cliché after blading.
2 : Some ink residue left on cliché after blading.
3 : Little ink residue left on cliché after blading.
4 : Very little ink residue left on cliché after blading.
5 : No ink residue left on cliché after blading.

### B. Surface appearance of the ink after printing cycle ended

1: Ink too dilute or too dry and unable to transfer print.
2: The ink in the basin appeared to have many clumps on the surface.
3: The ink in the basin appeared to have some clumps on the surface.
4: The ink in the basin appeared to have few clumps on the surface.
5: The ink in the basin appeared to have no clumps on the surface.

### C. Pad cleanness after printing cycle ended

1: The pattern on pad is unrecognizable.
2: The pattern on pad is very vague.
3: The pattern on pad is clear with some shadow at the edge of lines.
4: The pattern on pad is very clear with a little fuzziness at the edge of lines.
5: The pattern on pad is very clear without any shadow.

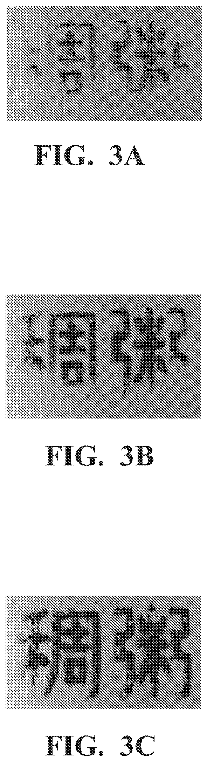

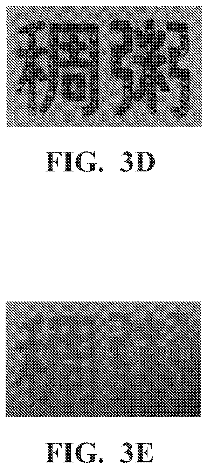

### D. Resolution of the printed pattern (see Figure 3)

1: The pattern is unrecognizable.
2: The pattern is recognizable vaguely.
3: The pattern is recognizable, but with some fuzziness.
4: More than 80% of the pattern is clearly recognizable, but with some shadow at the edge of lines.
5: The pattern is clear and complete without any shadow

### E. Continuous Cycling number

Each ink composition was printed on multiple test pans continuously (i.e. printing cycles) until one of the following situations happened, such as the resolution of the print image became deteriorated to the next level, ink dried too fast on the cliché or the pad which prohibits transferring the ink image to the test pan, or the ink became too clumpy and it was necessary to stop in order to clean either the blade or pad. The number of continuous printing cycles for each ink composition was recorded. The test ran twice and the data are reported in Table 2.

Embodiments of the present invention are further defined in the following Examples. Compositions of the examples and comparative examples, as well as the evaluation results, are shown in Tables 1 and 2.

**Table 1**

| Composition | E1 | E2 | E3 | E4 | E5 | E6 | E7 | E8 | E9 | E10 | E11 | E12 | CE1 | CE2 |
|---|---|---|---|---|---|---|---|---|---|---|---|---|---|---|
| Fluoropolymer | | | | | | | | | | | | | | |
| (a1) | 56.89 | 56.89 | 55.35 | 59.21 | 58.64 | 58.03 | | | | | | | | |
| (a2) | | | | | | | 58.03 | 66.48 | 55.27 | 54.78 | 55.56 | 55.27 | | 58.03 |
| (a3) | 2.33 | 2.33 | 2.27 | 2.43 | 2.40 | 2.16 | 2.16 | 2.47 | 2.06 | 2.04 | 2.07 | | | 2.16 |
| (a4) | 4.00 | 4.00 | | | | | | | | | | | | |
| (a5) | | | | | | | | | | | | 2.06 | | |
| (a6) | | | | | | | | | | | | | 67.37 | |
| (a7) | | | | | | | | | | | | | 5.21 | |

| Colorant | | | | | | | | | | | | | | |
|---|---|---|---|---|---|---|---|---|---|---|---|---|---|---|
| (b1) | 14.66 | 14.66 | 14.26 | 15.25 | 15.11 | 6.91 | 6.91 | | 6.58 | | | 6.58 | 16.43 | 6.91 |
| (b2) | 7.27 | 7.27 | 7.07 | 2.94 | 2.91 | 7.70 | 7.70 | | 7.33 | | | 7.33 | | 7.70 |
| (b3) | | | | | | | | | | 6.05 | | | | |
| (b4) | | | | | | | | | | 7.27 | | | | |
| (b5) | | | | | | | | | | | 7.00 | | | |
| (b6) | | | | | | | | | | | 2.78 | | | |
| (b7) | | | | | | | | | | | 3.35 | | | |
| (b8) | | | | | | | | | | | 0.001 | | | |

| Amorphous Silica | | | | | | | | | | | | | | |
|---|---|---|---|---|---|---|---|---|---|---|---|---|---|---|
| (c1) | 2.38 | 2.53 | 2.00 | 2.48 | 2.46 | 3.72 | 3.72 | 4.26 | 3.54 | 3.51 | 3.56 | 3.54 | | |
| (c2) | | | | | | | | | | | | | | 3.72 |

| Nonionic surfactant | | | | | | | | | | | | | | |
|---|---|---|---|---|---|---|---|---|---|---|---|---|---|---|
| (d1) | | | 0.21 | | 0.99 | 0.91 | 0.91 | 1.91 | 1.31 | 1.30 | 1.32 | 1.31 | | 0.91 |
| (d2) | 3.44 | 2.44 | 3.46 | 4.07 | 4.04 | 4.16 | 4.16 | 4.91 | 4.04 | 4.00 | 4.06 | 4.04 | 3.88 | 4.16 |

| Liquid Carrier | | | | | | | | | | | | | | |
|---|---|---|---|---|---|---|---|---|---|---|---|---|---|---|
| (e1) | 1.29 | | 7.12 | 10.70 | 10.59 | 7.51 | 7.51 | 13.06 | 9.41 | 9.33 | 9.46 | 9.41 | | 7.51 |
| (e2) | | 1.50 | | | | | | | | | | | | |
| (e3) | | 1.03 | 0.33 | | | | | | | | | | | |
| (e4) | | | 0.26 | | | | | | | | | | | |
| water | 5.88 | 5.88 | 5.72 | 2.38 | 2.36 | 6.23 | 6.23 | 2.50 | 7.20 | 8.43 | 7.62 | 7.20 | | 6.23 |

| Other Additives | | | | | | | | | | | | | | |
|---|---|---|---|---|---|---|---|---|---|---|---|---|---|---|
| Composition | E1 | E2 | E3 | E4 | E5 | E6 | E7 | E8 | E9 | E10 | E11 | E12 | CE1 | CE2 |
| (f1) | 0.42 | 0.42 | 0.40 | 0.43 | 0.42 | 0.38 | 0.38 | 0.44 | 0.37 | 0.36 | 0.36 | 0.37 | | 0.38 |
| (f2) | 0.07 | 0.07 | 0.06 | 0.03 | 0.03 | 0.07 | 0.07 | | 0.07 | 0.13 | | 0.07 | | 0.07 |
| (f3) | | | 0.08 | 0.09 | 0.08 | | | | | | | | | |
| (f4) | | | 0.13 | | | | | | | | | | | |
| (f5) | | | | | | | | | | | | | | |
| (f6) | 1.39 | 1.00 | 1.27 | | | 2.22 | 2.22 | 3.97 | 2.84 | 2.81 | 2.85 | 2.84 | 3.29 | 2.22 |
| (f7) | | | | | | | | | | | | | 3.83 | |
| Total | 100.02 | 100.02 | 99.99 | 100.01 | 100.03 | 100.00 | 100.00 | 100.00 | 100.02 | 100.01 | 99.99 | 100.02 | 100.01 | 100.00 |

**Table 2. Test Results**

| Sample ID | E1 | E2 | E3 | E4 | E5 | E5b | E6 | E6b | E7 | E8 | E9 | E10 | E11 | E12 | CE1 | CE2 |
|---|---|---|---|---|---|---|---|---|---|---|---|---|---|---|---|---|
| Viscosity (mPa.s) | 9600 | 5800 | 3550 | 2840 | 3430 | 10500 | 15400 | 37500 | 32000 | 7150 | 18200 | 6100 | 8700 | 5100 | 10320 | 1130 |
| Cliche cleanness | 5 | 5 | 5 | 5 | 5 | 5 | 5 | 5 | 5 | 5 | 5 | 5 | 5 | 5 | 5 | 5 |
| Ink appearance | 4 | 3 | 5 | 5 | 5 | 3 | 5 | 5 | 5 | 5 | 5 | 5 | 5 | 5 | 5 | 5 |
| Print pad cleanness | 4 | 4 | 4 | 4 | 4 | 4 | 4 | 4 | 4 | 3 | 4 | 5 | 4 | 4 | 3.5 | 1 |
| Resolution | 3.5 | 4 | 4 | 4.2 | 3.5 | 4 | 4.2 | 4.5 | 4.5 | 3* | 4 | 4.5 | 4 | 4.5 | 3.2 | 1 |
| Number of print cycles (1) | 48 | 58 | 48 | 41 | 64 | 60 | 87 | 97 | 274 | - | 120 | 310 | 110 | 306 | 85 | - |
| Number of print cycles (1) | 44 | 20 | 44 | 40 | 60 | 47 | 84 | 94 | 268 | - | 125 | 290 | 82 | 294 | 82 | - |

| | | | | | | | | | | | | | | | | |
|---|---|---|---|---|---|---|---|---|---|---|---|---|---|---|---|---|
| * Visible pattern after printing three times on one test pan. | | | | | | | | | | | | | | | | |

From the results of Table 2, the following are evident.

CE1 is a comparative ink composition having polyacrylate as the thixotropic agent. Compared to CE1, almost all of the ink compositions of the present invention (E1-E12) having amorphous silica particles as the thixotropic agent demonstrated to have better resolution of the printed pattern. The ink composition of E8 is the only example having slightly worse resolution compared to that of CE1 because the pattern was a composite of 3 prints. However, E8 demonstrated the unexpected benefit of having amorphous silica particles in the ink composition is that when the desired ink color is white, then no extra colorant is needed.

Notably, although the ink composition of CE2 contains the same amount of amorphous silica particles as the ink composition of E7, the B.E.T. surface area of the amorphous silica particles are different. In the ink composition of CE2, the silica particles having low B.E.T. surface area (< 3 m²/g) resulted in smeared print pad and led to an unrecognizable pattern. The results of E7 and CE2 clearly demonstrate that suitable amorphous silica particles in the present invention must have a high B.E.T. surface area at least greater than about 100 m²/g, preferably in a range of about 100-450 m²/g, more preferably about 150-400 m²/g.

The number of continuous printing cycles is another important factor for evaluating the performance of the present ink composition, especially for the productivity point of view. Preferably, an ideal ink composition can print as many cycles as possible and still produce high resolution pattern. However, in practice, most of the ink compositions when applied will require frequent stopping to clean the print pad, the cliché, the blade, etc. Therefore, ink compositions of E7, and E9-E12 are particularly preferred for demonstrating extremely high numbers of print cycles as well as high resolution print results.

With regards to ink stability, ink compositions of E5b and E6b were part of the same batch of the ink compositions of E5 and E6, respectively. The only difference was that they had been stored at room temperature for 1 month (with caps) and tested their print performance afterwards. The viscosity data of the 1 month old compositions (E5b and E6b) are higher than the respective freshly prepared ones (E5 and E6) which may be attributed to evaporation of the liquid carrier and/or water. It is surprising to observe that the overall print performance of the 1 month old compositions is equal or better than the freshly prepared ones, for example, in print resolution and the number of print cycles.

## Claims

1. An ink composition for forming a pattern on a non-stick coating, said ink composition comprising:
(a) 25-65 weight % of a fluoropolymer selected from PTFE, PFA, FEP, and mixtures thereof;
(b) 0-25 weight % of a colorant selected from organic pigments, inorganic pigments, and mixtures thereof;
(c) 1-15 weight % of fumed silica particles;
(d) 1-15 weight % of a nonionic surfactant, wherein the nonionic surfactant comprises at least one aliphatic alcohol ethoxylate, or a mixture thereof; and
(e) 10-50 weight % of a liquid carrier selected from water, water-miscible solvents and mixtures thereof;
wherein the weight % is based on the total weight of the ink composition;
the fumed silica particles have a specific gravity of 2.1-2.2 g/cm³;
the ink composition has a viscosity of 2,000-40,000 mPa.s; and
provided that the ink composition is essentially free of polyamideimide.

2. The ink composition of Claim 1 comprising non-volatile components including:
(a) 30-90 weight % of the fluoropolymer selected from PTFE, PFA, FEP, and mixtures thereof;
(b) 0-50 weight % of the colorant selected from organic pigments, inorganic pigments, and mixtures thereof; and
(c) 2-25 weight % of fumed silica particles;
wherein the weight % is based on the total weight of the non-volatile components.

3. The ink composition of Claim 1, wherein the fumed silica particles (c) have a BET surface area ranging from 100 to 450 m²/g.

4. The ink composition of Claim 1, wherein the nonionic surfactant (d) is a 1 compound or a mixture of compounds of the formula:
R(OCH₂CH₂)ₙOH
wherein R is a branched alkyl, branched alkenyl, cycloalkyl, or cycloalkenyl hydrocarbon group having 8-18 carbon atoms and n is an average value of 4 to 18.

5. The ink composition of Claim 4, wherein the nonionic surfactant (d) is an ethoxylate of 2,6,8-trimethyl-4-nonanol having an average of 4 to 18 ethylene oxide (EO) units or a mixture thereof.

6. A method for manufacturing a coated substrate comprising a non-stick coating having a pattern, wherein the method comprises:
A) applying a primer composition to a substrate and drying to form a primer coat;
B) optionally, applying a midcoat composition and drying to form a midcoat;
C) curing said primer coat and optional midcoat;
D) applying an ink composition to form a pattern, wherein said pattern comprises fumed silica particles;
E) applying a topcoat composition and drying to form the topcoat;
F) curing said topcoat;
wherein the ink composition comprises:
(i) 25-65 weight % of a fluoropolymer selected from PTFE, PFA, FEP, and mixtures thereof;
(ii) 0-25 weight % of a colorant selected from organic pigments, inorganic pigment, and mixtures thereof;
(iii) 1-15 weight % of fumed silica particles;
(iv) 1-15 weight % of a nonionic surfactant, wherein the nonionic surfactant comprises at least one aliphatic alcohol ethoxylate, or a mixture thereof; and
(v) 10-50 weight % of a liquid carrier selected from water, water-miscible solvents and mixtures thereof;
wherein the weight % is based on the total weight of the ink composition;
the fumed silica particles have a specific gravity of 2.1-2.2 g/cm³;
the ink composition has a viscosity of 2,000-40,000 mPa.s; and
provided that the ink composition is essentially free of polyamideimide.

7. The method of Claim 6, wherein the fumed silica particles have a BET surface area ranging from 100 to 450 m²/g.

8. The method of Claim 7, wherein the ink composition is applied by pad printing, screen printing, roller coating or coil coating.

9. The method of Claim 7, wherein the pattern is a decorative pattern or a marking.

## Patentansprüche

1. Tintenzusammensetzung zum Bilden eines Musters auf einer Antihaft-Beschichtung, wobei die Tintenzusammensetzung Folgendes umfasst:
(a) 25-65 Gew.-% eines Fluorpolymers ausgewählt unter PTFE, PFA, FEP und Mischungen davon;
(b) 0-25 Gew.-% eines Farbmittels ausgewählt unter organischen Pigmenten, anorganischen Pigmenten und Mischungen davon;
(c) 1-15 Gew.-% Teilchen pyrogener Kieselsäure;
(d) 1-15 Gew.-% eines nichtionischen Tensids, wobei das nichtionische Tensid mindestens ein aliphatisches Alkoholethoxylat oder einer Mischung davon umfasst; und
(e) 10-50 Gew.-% eines flüssigen Trägers ausgewählt unter Wasser, mit Wasser mischbaren Lösungsmitteln und Mischungen davon;
wobei der Gewichtsprozentsatz auf das Gesamtgewicht der Tintenzusammensetzung bezogen ist;
die Teilchen pyrogener Kieselsäure ein spezifisches Gewicht von 2,1-2,2 g/cm³ aufweisen;
die Tintenzusammensetzung eine Viskosität von 2.000-40.000 mPa.s aufweist; und
vorausgesetzt, dass die Tintenzusammensetzung im Wesentlichen frei von Polyamidimid ist.

2. Tintenzusammensetzung nach Anspruch 1, umfassend nichtflüchtige Komponenten, einschließlich:
(a) 30-90 Gew.-% des Fluorpolymers ausgewählt unter PTFE, PFA, FEP und Mischungen davon;
(b) 0-50 Gew.-% des Farbmittels ausgewählt unter organischen Pigmenten, anorganischen Pigmenten und Mischungen davon;
(c) 2-25 Gew.-% Teilchen pyrogener Kieselsäure;
wobei der Gewichtsprozentsatz auf das Gesamtgewicht der nichtflüchtigen Komponenten bezogen ist

3. Tintenzusammensetzung nach Anspruch 1, wobei die Teilchen pyrogener Kieselsäure (c) einen BET-Oberflächenbereich im Bereich von 100 bis 450 m²/g aufweisen.

4. Tintenzusammensetzung nach Anspruch 1, wobei das nichtionische Tensid (d) eine Verbindung oder eine Mischung von Verbindungen der Formel:
R(OCH₂CH₂)ₙOH
ist, wobei R eine verzweigte Alkyl-, verzweigte Alkenyl-, Cycloalkyl- oder Cyloalkenyl-Kohlenwasserstoffgruppe ist, die 8-18 Kohlenstoffatome aufweist und n ein durchschnittlicher Wert von 4 bis 18 ist.

5. Tintenzusammensetzung nach Anspruch 4, wobei das nichtionische Tensid (d) ein Ethoxylat von 2,6,8-Trimethyl-4-nonanol, das im Durchschnitt 4 bis 18 Ethylenoxid-(EO-) Einheiten aufweist, oder eine Mischung davon ist.

6. Verfahren für die Herstellung eines beschichteten Substrats umfassend eine Antihaft-Beschichtung, die ein Muster aufweist, wobei das Verfahren Folgendes umfasst:
A) das Aufbringen einer Grundierungszusammensetzung auf ein Substrat und Trocknen, um einen Grundierungbelag zu bilden;
B) wahlweise das Aufbringen einer mittleren Belagzusammensetzung und Trocknen, um einen mittleren Belag zu bilden;
C) das Aushärten der Grundierbelags und wahlweise des mittleren Belags;
D) das Aufbringen einer Tintenzusammensetzung, um ein Muster zu bilden, wobei das Muster Teilchen pyrogener Kieselsäure umfasst;
E) das Aufbringen einer Deckbelagzusammensetzung und Trocknen, um den Deckbelag zu bilden;
F) das Aushärten des Deckbelags;
wobei die Tintenzusammensetzung Folgendes umfasst:
(i) 25-65 Gew.-% eines Fluorpolymers ausgewählt unter PTFE, PFA, FEP und Mischungen davon;
(ii) 0-25 Gew.-% eines Farbmittels ausgewählt unter organischen Pigmenten, anorganischen Pigmenten und Mischungen davon;
(iii) 1-15 Gew.-% Teilchen pyrogener Kieselsäure;
(iv) 1-15 Gew.-% eines nichtionischen Tensids, wobei das nichtionische Tensid mindestens ein aliphatisches Alkoholethoxylat oder eine Mischung davon umfasst; und
(v) 10-50 Gew.-% eines flüssigen Trägers ausgewählt unter Wasser, mit Wasser mischbaren Lösungsmitteln und Mischungen davon;
wobei der Gewichtsprozentsatz auf das Gesamtgewicht der Tintenzusammensetzung bezogen ist;
die Teilchen pyrogener Kieselsäure ein spezifisches Gewicht von 2,1-2,2 g/cm³ aufweisen;
die Tintenzusammensetzung eine Viskosität von 2.000-40.000 mPa.s aufweist; und
vorausgesetzt, dass die Tintenzusammensetzung im Wesentlichen frei von Polyamidimid ist.

7. Verfahren nach Anspruch 6, wobei die Teilchen pyrogener Kieselsäure einen BET-Oberflächenbereich im Bereich von 100 bis 450 m²/g aufweisen.

8. Verfahren nach Anspruch 7, wobei die Tintenzusammensetzung durch Tampondruck, Siebdruck, Walzenbeschichten oder Bandbeschichten aufgebracht wird.

9. Verfahren nach Anspruch 7, wobei das Muster ein dekoratives Muster oder eine Markierung ist.

## Revendications

1. Composition d'encre destinée à former un motif sur un revêtement non collant, ladite composition d'encre comprenant:
(a) de 25 à 65 % en poids d'un polymère fluoré sélectionné parmi le PTFE, le PFA, le FEP, et leurs mélanges;
(b) de 0 à 25 % en poids d'un colorant sélectionné parmi les pigments organiques, les pigments inorganiques, et leurs mélanges;
(c) de 1 à 15 % en poids de particules de silice sublimée;
(d) de 1 à 15 % en poids d'un tensioactif non ionique, le tensioactif non ionique comprenant au moins un éthoxylate d'alcool aliphatique, ou un mélange de celui-ci; et
(e) de 10 à 50 % en poids d'un support liquide sélectionné parmi l'eau, les solvants miscibles dans l'eau et leurs mélanges;
le pourcentage en poids étant basé sur le poids total de la composition d'encre;
les particules de silice sublimée présentant une densité relative de 2,1 à 2,2 g/cm³;
la composition d'encre présentant une viscosité de 2 000 à 40 000 mPa•s; et
à condition que la composition d'encre soit essentiellement exempte de polyamide imide.

2. Composition d'encre selon la revendication 1 comprenant des constituants non volatils comprenant:
(a) de 30 à 90 % en poids du polymère fluoré sélectionné parmi le PTFE, le PFA, le FEP, et leurs mélanges;
(b) de 0 à 50 % en poids du colorant sélectionné parmi les pigments organiques, les pigments inorganiques, et leurs mélanges; et
(c) de 2 à 25 % en poids de particules de silice sublimée;
le pourcentage en poids étant basé sur le poids total des constituants non volatils.

3. Composition d'encre selon la revendication 1, dans laquelle les particules de silice sublimée (c) présentent une surface B.E.T. s'étendant de 100 à 450 m²/g.

4. Composition d'encre selon la revendication 1, le tensioactif non ionique (d) étant un composé ou un mélange de composés de la formule:
R(OCH₂CH₂)ₙOH
R étant un groupe hydrocarbure alkyle ramifié, alcényle ramifié, cycloalkyle, ou cycloalcényle ayant de 8 à 18 atomes de carbone et n étant une valeur moyenne de 4 à 18.

5. Composition d'encre selon la revendication 4, le tensioactif non ionique (d) étant un éthoxylate de 2,6,8-triméthyl-4-nonanol ayant une moyenne de 4 à 18 motifs oxyde d'éthylène (EO) ou un mélange de ceux-ci.

6. Procédé de fabrication d'un substrat revêtu comprenant un revêtement non collant présentant un motif, le procédé comprenant:
A) l'application d'une composition d'amorce à un substrat et le séchage pour former un revêtement d'amorce;
B) optionnellement, l'application d'une composition de revêtement médian et le séchage pour former un revêtement médian;
C) le durcissement dudit revêtement d'amorce et du revêtement médian facultatif;
D) l'application d'une composition d'encre pour former un motif, ledit motif comprenant des particules de silice sublimée;
E) l'application d'une composition de revêtement de finition et le séchage pour former le revêtement de finition;
F) le durcissement dudit revêtement de finition;
la composition d'encre comprenant:
(i) de 25 à 65 % en poids d'un polymère fluoré sélectionné parmi le PTFE, le PFA, le FEP, et leurs mélanges;
(ii) de 0 à 25 % en poids d'un colorant sélectionné parmi les pigments organiques, les pigments inorganiques, et leurs mélanges;
(iii) de 1 à 15 % en poids de particules de silice sublimée;
(iv) de 1 à 15 % en poids d'un tensioactif non ionique, le tensioactif non ionique comprenant au moins un éthoxylate d'alcool aliphatique, ou un mélange de celui-ci; et
(v) de 10 à 50 % en poids d'un support liquide sélectionné parmi l'eau, les solvants miscibles dans l'eau et leurs mélanges;
le pourcentage en poids étant basé sur le poids total de la composition d'encre;
les particules de silice sublimée présentant une densité relative de 2,1 à 2,2 g/cm³;
la composition d'encre présentant une viscosité de 2 000 à 40 000 mPa•s; et
à condition que la composition d'encre soit essentiellement exempte de polyamideimide.

7. Procédé selon la revendication 6, les particules de silice sublimée présentant une surface B.E.T. s'étendant de 100 à 450 m²/g.

8. Procédé selon la revendication 7, la composition d'encre étant appliquée par tampographie, par sérigraphie, revêtement au rouleau ou enduction de bandes en continu.

9. Procédé selon la revendication 7, le motif étant un motif décoratif ou un marquage.
